# EUROPEAN PATENT APPLICATION

(11) **EP 2 554 944 A2**
(43) Date of publication of application: **06.02.2013**
(21) Application number: 12005605.6
(22) Date of filing: 01.08.2012
(51) Int. Cl.: G01C 15/00, G01C 21/00

(54) **Mission specific terrain analysis**

(30) Priority: 03.08.2011 US 201113197451
(71) Applicant: Harris Corporation, Melbourne, FL 32919 (US)
(72) Inventor: Miller, Darius, F., San Diego CA 92129 (US); Rueter, Scott, P., San Marcos CA 92069 (US)
(74) Representative: Schmidt, Steffen J.

(57) **Abstract**

Method for mission adaptable terrain analysis of a plurality of geographic cells (404) comprising an analysis area (406). The method (100) includes receiving a user determined selection of at least one terrain algorithm component (302) to be used for the analysis area, and a user determined selection of input data (314) to be used by the terrain algorithm component. The input data has an input data format and an input data semantic. The method can further involve receiving a user determined selection of at least one of a plurality of transform components (608).

## Description

### BACKGROUND OF THE INVENTION

### Statement of the Technical Field

The inventive arrangements relate to terrain analysis, and more particularly to methods and systems that facilitate terrain analysis for a wide range of situations and missions.

### Description of the Related Art

Terrain analysis involves systems and methods for extracting useful information from terrain based data. For example, there are known systems capable of characterizing visibility features of a geographic region. Such analysis can include a determination of regions that offer visibility with respect to surrounding areas, cover and concealment. Another example of a common terrain analysis system is one that can offer route planning through a network of roads. Terrain analysis has also been used in the communication context to evaluate communication links. These and other different types of terrain analysis systems requires specialized algorithms which perform calculations based on stored digital map data. The algorithms use cost functions or other evaluation criteria to evaluate terrain data with respect to some particular characteristic that the system is designed to evaluate.

In the military context, various different terrain analysis systems have been fielded to aid military planners. These include the NATO Reference Mobility Model (NRMM), which allows movement analysis based on vehicle characteristics, the U.S. Army's Terrain Evaluation Module (TEM) which provides terrain categorization, line of sight analysis and route planning. The Geographic Resources Analysis Support System, commonly referred to as GRASS GIS, is a Geographic Information System (GIS) used for data management, image processing, graphics production, spatial modeling, and visualization of many types of data. All of these systems can be useful for certain specific tactical situations. Often, however, evaluation of a particular piece of terrain will be highly specific to a particular mission and will involve consideration of variable requirements.

### SUMMARY OF THE INVENTION

Embodiments of the invention concern a method for mission adaptable terrain analysis of a plurality of geographic cells comprising an analysis area. The method includes receiving a user determined selection of at least one terrain algorithm component to be used for the analysis area, and a user determined selection of input data to be used by the terrain algorithm component. The input data has an input data format and an input data semantic. The method can further involve receiving a user determined selection of at least one of a plurality of transform components. Each transform component is capable of transforming basic terrain evaluation data to input data having the input data format and the input data semantic for at least one of the terrain algorithm components. Thereafter, the basic terrain evaluation data is transformed to input data having the input data format and the input data semantic required for the at least one terrain algorithm component selected by the user. Finally, the input data is processed with the terrain algorithm component to generate a higher level terrain analysis. The method can also include a user determined selection of at least one raster display for visualizing an output data of the terrain analysis algorithm on a display unit. The method can also include receiving a user determined selection of a plurality of basic map elements and at least one logical operator to define a basic terrain analysis query. The basic terrain query is then evaluated in the basic terrain evaluation component to determine the basic terrain evaluation data.

The invention also concerns a mission adaptable terrain analysis system comprising a computer storage medium encoded with computer-executable components. These components include: a first input component that, when executed, receives a user determined selection of a plurality of basic map elements and at least one logical operator which in combination define a basic terrain analysis query; and at least one basic terrain evaluation component that, when executed, is capable of determining a basic terrain evaluation for each of a plurality of geographic cells within a predefined analysis area in accordance with the basic terrain analysis query. The invention also includes a plurality of terrain algorithm components each, when executed, capable of processing information derived from the basic terrain evaluation of each the geographic cell, to generate a higher level analysis pertaining to the predefined analysis area. A second input component is provided that, when executed, receives a user determined selection of at least one the terrain algorithm component and a user determined selection of input data to be used by the terrain algorithm component. The input data has an input data format and an input data semantic as described above. A plurality of transform components are also provided. The transform components, when executed, are configured to selectively transform data comprising the basic terrain evaluations to the input data format. A third input component, when executed, receives a user determined selection of at least one the transform component.

### BRIEF DESCRIPTION OF THE DRAWINGS

Embodiments will be described with reference to the following drawing figures, in which like numerals represent like items throughout the figures, and in which:

FIG. 1 is a flowchart that is useful for understanding the present invention.

FIG. 2 is a drawing that is useful for understanding a software application interface that can be used with the present invention.

FIG. 3 is an example of a terrain algorithm dialog box.

FIG. 4 is an example of a dialog box for selecting an area of operation upon which a terrain analysis is to be performed.

FIG 5A-5C are drawings of a basic terrain analysis query dialog box.

FIG. 6 is a dialog box for selecting one or more transform components and associated input data.

FIG. 7 is a block diagram that is useful for understanding a computer system in which the current invention can be implemented.

### DETAILED DESCRIPTION

The invention is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operation are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

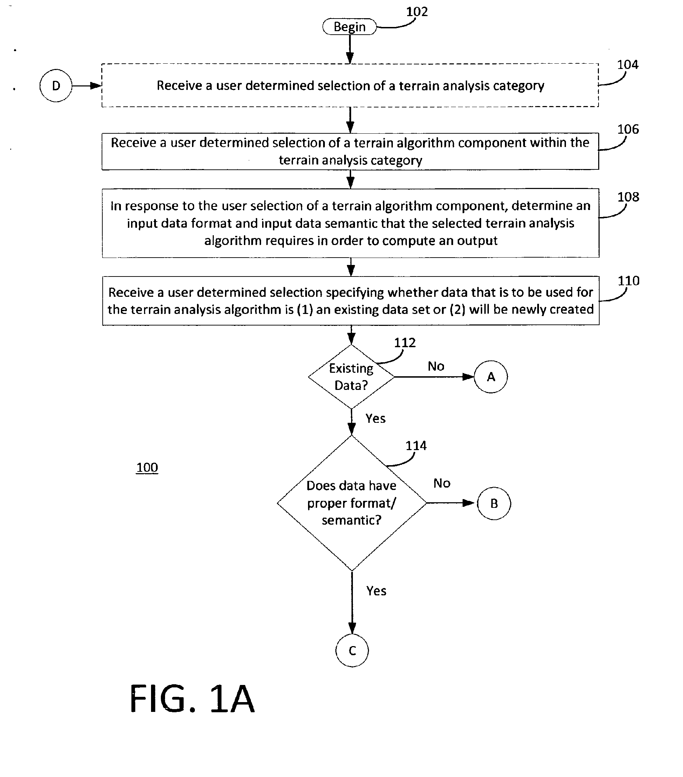

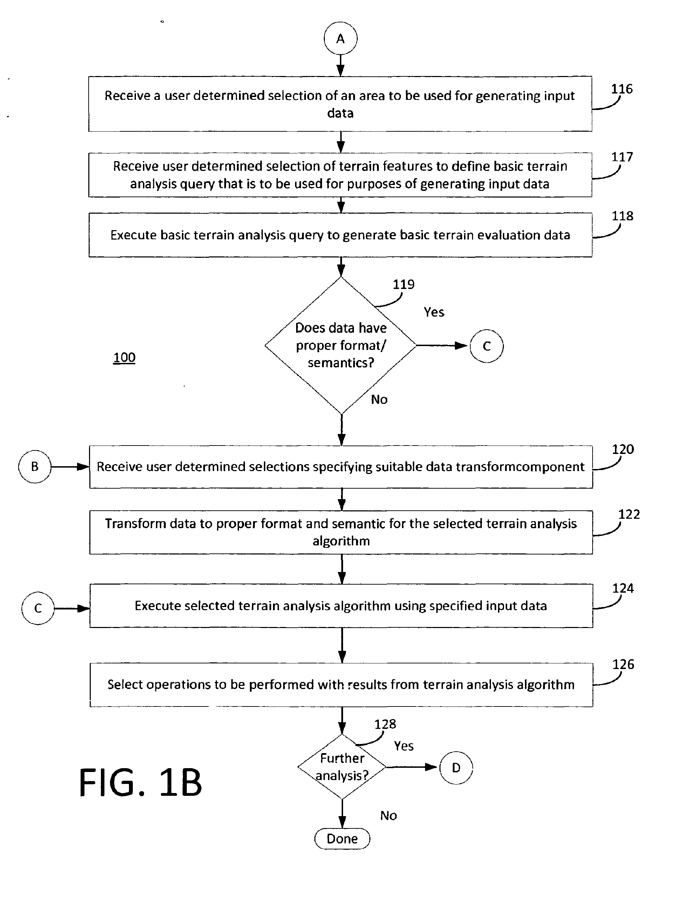

Referring now to FIG. 1, a flowchart 100 is provided which is useful for understanding the invention. The invention generally concerns a method for mission adaptable terrain analysis of a plurality of geographic cells comprising an analysis area. Accordingly, the method can begin in step 102 and continue with step 104. Step 104 is an optional step in which a user selects a terrain analysis category. A terrain analysis category can be any suitable broadly defined type of terrain analysis that is useful for organizing a set of terrain algorithms. For example, in some embodiments, a set of terrain algorithms can be organized into three basic categories comprising point, line and area types of algorithms. Terrain algorithms in the point category are those which involve evaluation of some relationship or set of conditions as between a single terrain location and its surrounding areas. Terrain algorithms in the line category are those which involve evaluation of some relationship or set of conditions pertaining to a path or transition between two separate terrain locations. Terrain algorithms in the area category are those which involve evaluation of some relationship or set of conditions pertaining to a two-dimensional terrain area. Still, it should be understood that the invention is not limited to these particular terrain analysis categories, and other terrain analysis categories are also possible.

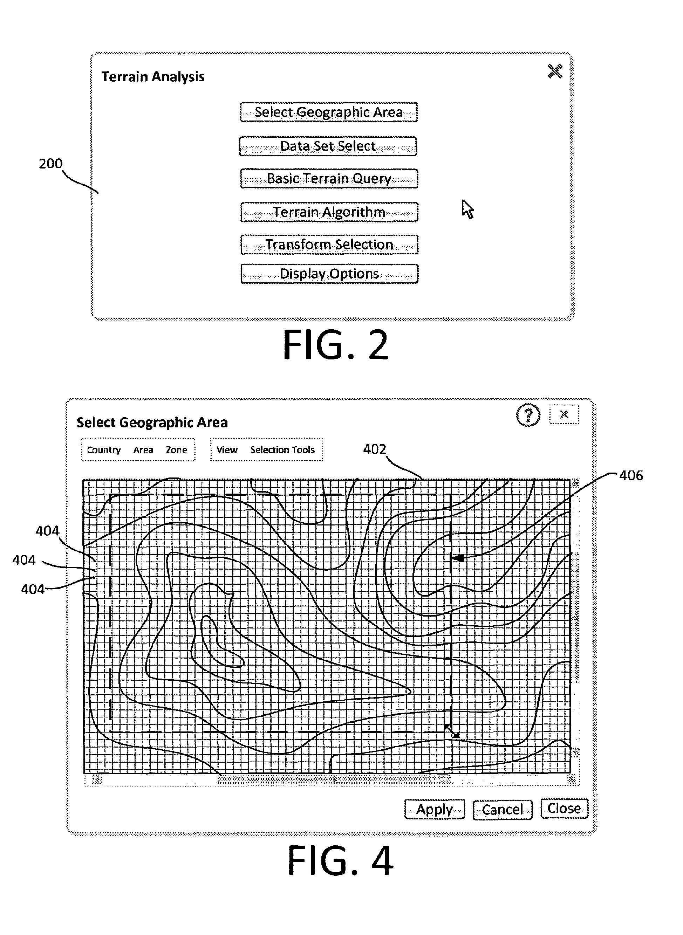

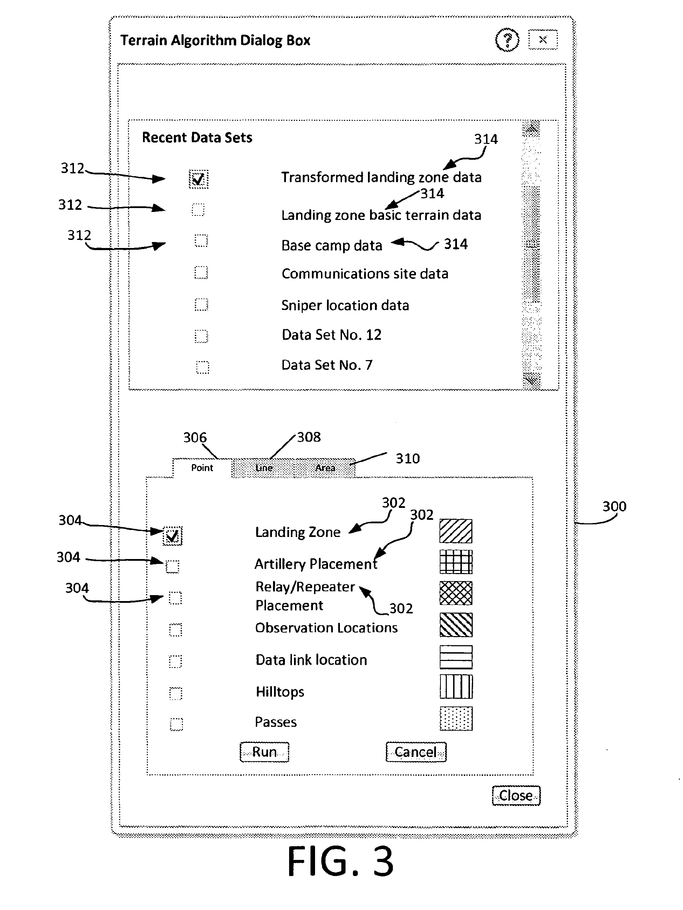

A user can initiate step 104 by clicking on a "Terrain Algorithm" button on an application screen 200 in FIG. 2. This will cause the system to display a terrain algorithm dialog box 300 in FIG. 3. The dialog box 300 is one example of an interactive screen in which a user can select one or more of a plurality of terrain analysis categories using tabs 306, 308, 310. In an alternative embodiment, a selection of a terrain analysis category can be omitted, and a user can proceed directly to step 106.

In step 106, a user selects a particular terrain algorithm component within tab 306, 308, or 310. FIG. 3 shows one example of a dialog box 300 in which a user can select one or more of a plurality of terrain algorithm components 302. Those skilled in the art will appreciate that many terrain analysis algorithms are possible and the plurality of terrain algorithm components shown in FIG. 3 are merely one possible example. The user can select particular terrain algorithm components by clicking on check boxes 304 to indicate whether or not a particular terrain algorithm component has been selected. In this particular example, the terrain algorithm component selected is "Landing Zone," indicating that the user wishes to analyze selected terrain to identify a suitable landing zone location for aircraft.

Each terrain algorithm used to analyze terrain will generally require certain inputs in order to perform its intended analysis function. More particularly, a terrain analysis algorithm will typically require some input data having a particular input data format with some input data semantic associated therewith. Input data formats are well know and therefore will not be described here in detail. However, it should be understood that the input data format will generally specify how input terrain information is expressed. In almost all cases, the terrain algorithms require a raster of data with the appropriate type of data and representation of data. Referring now to FIG. 4, it can be observed that the term "raster" or "raster data" refers to a data set corresponding to a map image 402 formed by a matrix of cells 404 arranged in rows and columns. In FIG. 4, a visible grid is shown to help understand the concept of raster data; however such grid does not need to be displayed in many embodiments. A cell 404 can comprise an area on the map as small as a single pixel, but in some embodiments it can be convenient for each cell to be comprised of a larger number of pixels.

Each of the cells 404 of a particular raster data set will generally be assigned some value. The value will have some meaning which is generally based on or derived from terrain information. For example, the value assigned to a particular cell can represent a time cost to use the cell, a percent of mobility assigned to a cell, a percent of visibility assigned to the cell, a scalar modifier (e.g., multiplier, addition, subtraction), the slope of the cell, and so on. The particular meaning assigned to the cell is referred to herein as the context or semantic of what the cell represents. The semantic meaning of cell values within a raster data set are important because a particular terrain algorithm will not provide meaningful results unless it is provided with the proper kind of input data. For example, a terrain algorithm that evaluates a point to point route through a particular area might use input data which specifies a time cost to use each cell, or a percentage of mobility associated with each cell; but it would not use input data that specifies a scalar modifier for each cell.

Referring once again to FIG. 1, the process continues in step 108 with a determination of the input data format and the input data semantic that are needed for a particular terrain algorithm selected by a user. This information is useful for subsequent processing described below. The input data format and input data semantic will generally be stored in a memory or look-up table that is cross-referenced to each particular terrain algorithm. In step 110, the process continues by receiving a user determined selection specifying whether data that is to be used for the selected terrain analysis algorithm component is an existing raster data set, or will be newly created data. This step can be performed with a dialog box accessed through a Data Set Select button in application screen 200. The user can select one or more data sets listed in a dialog box (not shown). If the user specifies that the raster data set does not already exist (112: No) then the process continues to step 116 so that the data set can be created.

In step 116, the process continues by receiving a user determined selection of a map area that is to be used for generating input data. This can be accomplished by the user clicking on a control panel button such as "Select Geographic Area" as shown in application screen 200 in FIG. 2. This action can cause the system to respond by displaying the dialog box 402 as illustrated in FIG. 4. The user can then choose a map area 406 for which a terrain analysis is to be performed. The map area 406 can be resized using a cursor and when the user is satisfied with the selection, he can accept it by pressing the Apply button.

In step 117, the process continues by receiving a user selection of terrain features to define a basic terrain analysis query that will be used for generating input data. This step can also involve receiving a user determined selection of a plurality of basic map elements and at least one logical operator to define a basic terrain analysis query. The basic terrain analysis query is then executed by one or more basic terrain evaluation components which can be implemented in hardware and/or software. The one or more basic terrain evaluation components, when executed, are capable of performing a basic terrain evaluation for each of a plurality of geographic cells within a predefined analysis area in accordance with the basic terrain analysis query.

The input data for a basic terrain analysis query can comprise data that is available directly from the content of a data file associated with a digital map of a geographic area. As such, the operations performed as a result of the basic terrain analysis query differ somewhat from the terrain algorithm component described above. Notably, the input data for the terrain algorithm component in step 106 will typically require some pre-processing of data contained in the digital map data file so that the data has the proper input data format and semantic. In contrast, the analysis performed in response to the basic terrain query in step 117 will generally use raw data available directly from the digital map data file. Still, the invention is not limited in this regard and input data for the basic terrain analysis query can be preprocessed as well. The user can generate a basic terrain analysis query by selecting one or more basic map elements, described below, which are to be included as part of the query.

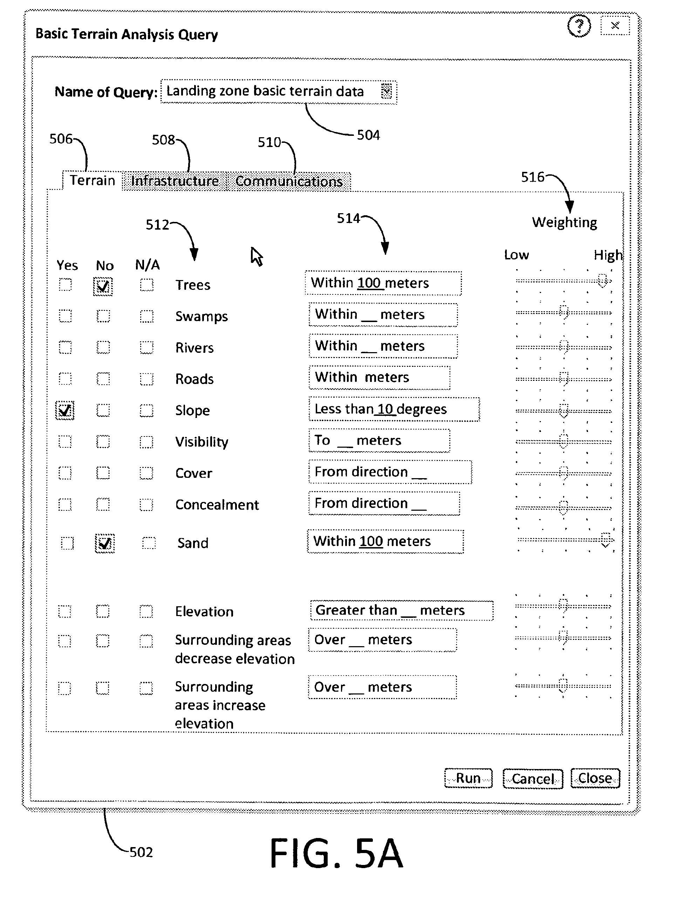

In an exemplary embodiment shown in FIG. 5A-5B, a user can initiate a basic terrain analysis query by using a cursor to click on the Basic Terrain Query button in the application screen 200. The button selection initiates a Basic Terrain Analysis Query dialog box 502 which will prompt a user to name the basic terrain analysis query in a data entry box 504. The dialog box 502 can also have a series of tabs 506, 508, 510 which organize an available selection of one or more basic map elements 512 to be included in a basic terrain analysis query. In the example shown, the tabs organize the basic map element based on whether the map element is a terrain based feature, an infrastructure based feature, or a communication based feature. The various type of map elements associated with each tab are shown in the figures.

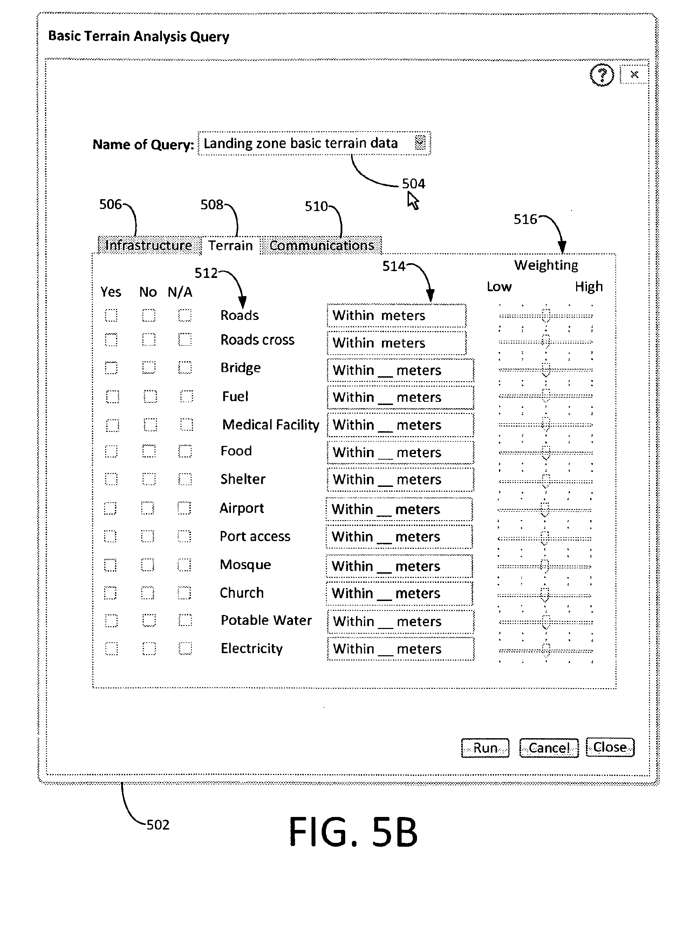

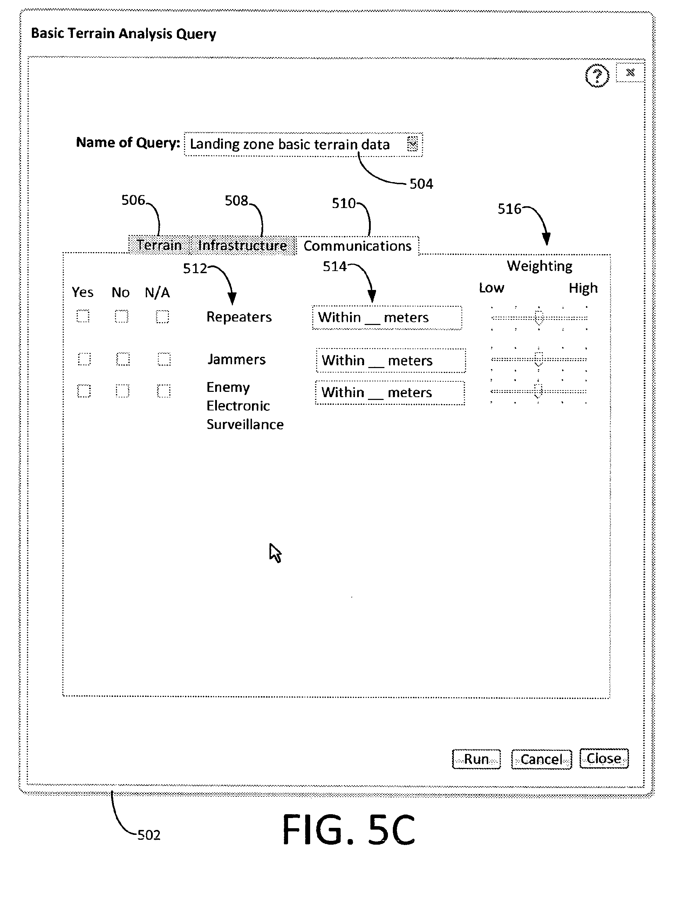

The user can specify how a specific map element is to be processed in a particular query by using a cursor to check Yes, No, or N/A, where "Yes" means that the map element must be present in or near the particular cell; "No" means that the map element must not be present at the particular cell, and "N/A" means that the map element is not applicable or not relevant to the particular query. The system constructs a query using one or more logical operators based on the user selections. For example, in FIG. 5A if the user checks "Yes" in the box next to map elements: trees, swamps, and rivers, the system will build a query that searches map data for cells that include trees AND swamps AND rivers. In this case the logical operator would be "AND". In another embodiment (not shown), users can select other logical operators. For example, a user could create a query which evaluates cells by determining whether they containing either trees OR swamps. Still, the invention is not limited in this regard. Data entry boxes 514 can allow the user to enhance the search with greater specificity by including additional criteria relevant to a particular basic map element 512. Finally, the relative importance of the presence or absence of a particular basic map element can be adjusted by a user to correspond to the relative importance of a particular item. In the example shown, sliders 516 are used to assign a weighting factor for each basic map element. Any suitable method can be used to construct the basic terrain query described herein and the invention is not intended to be limited to the particular methods described with respect to FIG. 5.

According to a preferred embodiment, the data entry box 504 can be in the form of a drop down menu to allow a user to select from a plurality of existing basic terrain analysis queries. These existing queries can be presented in the form of query templates, such that a selection of one of the existing basic terrain analysis queries will automatically populate the tabs 506, 508, 510 with certain map elements 512 which are pre-selected. The template can also automatically populate data entry boxes 514 and adjust sliders 516 in accordance with predetermined values and settings.

The use of templates can facilitate fast selection of frequently used basic terrain queries. Moreover, such templates can be used by inexperienced operators to generate input data sets for higher level queries which are assured to have the correct input data format and input data semantic. Significantly, users with more experience and knowledge regarding construction of queries and required inputs for terrain analysis algorithms can tailor basic terrain analysis query to existing missions. In this regard it will be appreciated that missions and circumstances are constantly changing and there are nearly endless permutations of different types of terrain analysis that may be required for varying circumstances. By allowing the user to selectively modify the basic terrain analysis query that is used to generate input data for a higher level algorithm, the user has a much greater ability to perform terrain analysis for each specific mission.

In order to better understand this concept, it is helpful to consider an example. In FIG. 3, one of the available terrain algorithm components is "Landing Zone". For this example we assume that a helicopter landing zone generally requires at least (1) an area that is free of trees and (2) has a slope that is less than some predetermined value. Accordingly, a template could be provided for a basic terrain analysis query in FIG. 5 such that each cell of a digital map is analyzed in accordance with these two criteria. The basic terrain analysis query assigns each cell a corresponding value based on the pre-determined selection of basic map elements 512, values entered in data entry boxes 514, and settings for sliders 516. The results of this basic terrain analysis would form an input data raster that could then be used in a higher level terrain analysis performed by a terrain algorithm component. For example, each cell could be assigned a value between zero and one which specifies how well it satisfies the requirements of elements (1) and (2) above.

The higher level terrain algorithm component in FIG. 3 can use the results of the basic query as input data, and perform some higher level processing to evaluate whether an area is truly suitable for a landing zone. For example, the values assigned to many cells by the basic terrain analysis query may indicate that such cells meet the two required criteria to some extent. In this example, such suitability can be indicated by the fact that the cell value determined by the basic terrain analysis query exceeds some threshold value between zero and one (e.g., threshold = 0.85). Still, such cells may not be part of a contiguous area large enough to accommodate a helicopter landing. Accordingly, the higher level terrain algorithm can evaluate the input data for each cell, and identify areas as suitable landing zones only where the threshold value of 0.85 is exceeded by a relatively large contiguous area of cells, thereby indicating a sufficiently large size landing zone area.

From the foregoing it will be understood that the use of a conventional template may be satisfactory for identifying a landing zone for a helicopter. Assume however, that in a particular mission, the landing zone the user is searching for is not to be used by a helicopter, but is instead to be used by a jet engine powered V/STOL (vertical and/or short take-off and landing) aircraft. Assume further that the V/STOL aircraft cannot tolerate the presence of sand at a landing zone. A user could therefore modify the basic terrain analysis query to perform a customized query, which in FIG. 5A is named "Landing zone basic terrain data". This query is a modified landing zone basic terrain data search which looks for locations absent of trees, with a relatively small slope, and where sand is not present. The search is set up by checking by checking "No" in the box next to the basic map elements "trees" and "sand" in FIG. 5A. In the corresponding ones of the data entry boxes 514, the user could indicate that there must be no trees or sand within 100 meters. The sliders 516 could be moved to indicate that these particular elements of the query are of high importance. In addition, the check box for Slope is marked "Yes" and a corresponding one of the data entry boxes 514 indicates that slope must be less than 10 degrees. The resulting output from this basic terrain analysis query could then be used as input data for the higher level terrain algorithm called component called "Landing Zone" in FIG. 3. The Landing Zone terrain algorithm will function generally as described above, but in this example, the input data value for each cell would be based on three basic map elements, (absence of sand, absence of trees, and a slope less than 10 degrees) rather than only two basic map elements (no trees, slope less than 10 degrees). The foregoing is one simple example of how the system can facilitate mission specific terrain evaluation. However, the invention is not limited in this regard and any other type of mission specific search can be facilitated with the method described herein.

Referring once again to FIG. 1, the process can continue in step 118 with the execution of a basic terrain analysis query to generate basic terrain evaluation data. In step 119 a determination can be made as to whether the basic terrain evaluation data has the proper format and/or semantic. A similar determination is made in step 114; accordingly, steps 114 and 119 will be discussed together. In the case where existing input data is already available, or a template is used to generate the basic terrain analysis query, the data format and semantic may be suitable for the terrain algorithm component selected by the user. However, in some cases, the user may select the wrong raster data set, or may modify the basic query in a way that renders the data unsuitable as input data for use in the higher level terrain algorithm component. Accordingly, steps 114, 119 are a useful check for ensuring the proper data is provided to the terrain algorithm component. Also, there may be instances where a user has generated the basic terrain evaluation data in a way that was not anticipated, and/or using an unusual basic terrain analysis query. Such data may need further processing before it can be used by the higher level terrain analysis component. Accordingly, if the data does not have the proper format/semantic (114, 119: No) then the method continues on to step 120.

In step 120, a user selects at least one of a plurality of desired transform components which are suitable to convert basic terrain evaluation data to a data format and semantic that is useful for the higher level terrain analysis component. For example, the basic terrain evaluation data may be such that it can be any value between zero and one, whereas the higher level terrain algorithm component may permit only binary input data where each cell has an assigned value of zero or one. Accordingly, a transform component can be selected which transforms an input data value for a cell to zero if it is below a certain threshold (e.g., threshold = 0.75) and transforms the input value to equal one if the value is above the certain threshold.

A transform component can be any processing component capable of transforming or converting a data set from one set of values to another set of values. As such, the transform component can be without limitation a function, a method, or a script that is capable of performing the required transformation. In some cases, a combination of transform components can be used to convert one set of input data to another set of input data that is more suited for a particular type of terrain algorithm component.

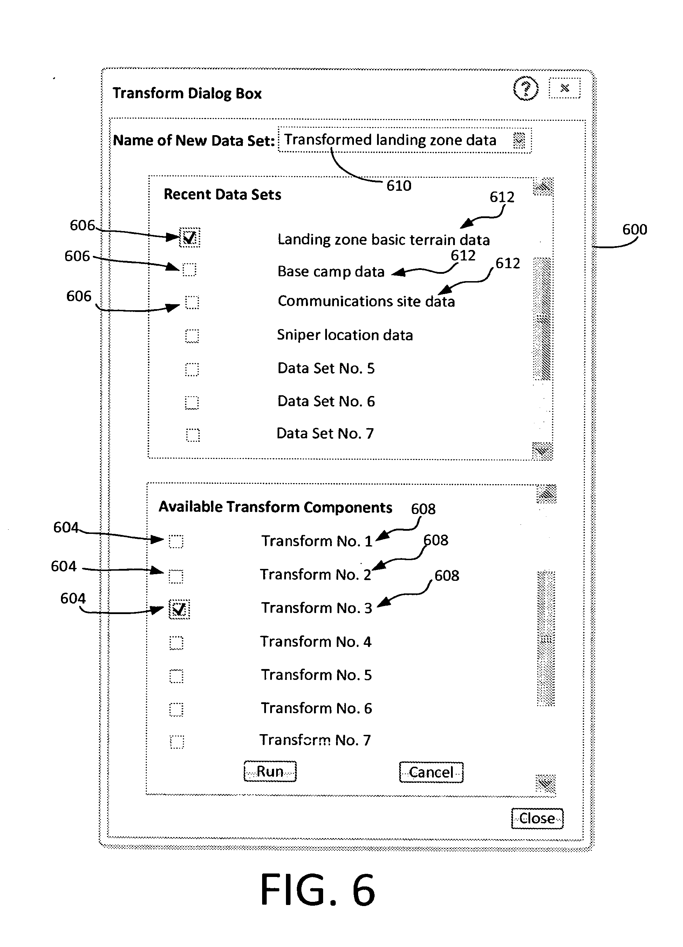

Referring now to FIG. 6, there is shown a Transform Dialog Box 600 which facilitates a user selection of a transform component 608. The user selects a transform component 608 by clicking on a check box 604. The user can identify the input data set to be transformed by selecting a check box 606 associated with at least one data set 612. In the example, shown, the data to be transformed is the "Landing zone basic terrain data" as previously described with respect to FIG. 5. In some instances, a transform may require two or more input data sets, in which case the user can select a plurality of data sets as input data for the transform component. The name of the new data set produced by the transform component can be user specified in a text entry box 610. In the example shown in FIG. 6, the new or transformed data is named: "Transformed landing zone data."

The transform components can be expected to fall into various categories or types as follows:
- Access - is able to extract the proper data from a specific raw data set (VPF,DTED, etc.)
- Mapping - converts an input (e.g., string) to a number, or an integer to a real value, as an example.
- Scalar - adjusts the value by applying a mathematical operator and a value to each input
- Interpolation - converts one range of values to a second range of values using different means (linear, bi-linear, cubic, etc.)
- Logical - evaluates one or more inputs to produce one output (not, and, or, xor, etc.)
- Combinational - evaluates two or more inputs and produces a single output
- Conditional - if than else statement
Of course, other transform components are also possible, and the invention is not intended to be limited in this regard.

The invention is not limited to selecting existing transform components. Instead, a user can be permitted to create a customized transform component. A customized transform component can be a modification of one of the existing transform components, a logical combination of two or more of the existing transform components, or an entirely new transform component capable of transforming data in a way that is different from the plurality of transform components. Additional dialog boxes (not shown) can be provided for creating and/or modifying transform components in this way. Any suitable method can be provided to facilitate user modification or construction of transform components. For example, a separate dialog box can be provided in which the user can manually create and enter a transform algorithm, which will thereafter appear in the list of available transform components 608. The transform can be loaded in and registered as an available component (possibly at tool "startup") as a terrain transformation component that has expected inputs and defined outputs defining the transformation. In some embodiments, the algorithm can incorporate an interface or user dialog which permits the transform to specify to the user the options in transformation from 1 or more input into an output. Transform construction and modification can be in some embodiments limited to more sophisticated users, since significant knowledge and understanding of the underlying data and algorithms may be needed to properly construct and/or modify a transform.

Referring again to FIG. 1, the method can continue with step 122 with the step of transforming data to the required or proper format for the selected terrain analysis algorithm. For example, this can be accomplished by the user activating the Run button in dialog box 600. At this point the necessary input data is available for the terrain analysis algorithm component selected in step 106. Within the terrain algorithm dialog box 300 the user can choose one of the data sets 314. In the example shown in FIG. 3, the selected data set 314 is the "Transformed landing zone data" as named in FIG. 6. The data set is selected by a user activation of a check box 312. With the terrain analysis algorithm component and the proper data now specified, the user can execute the selected terrain analysis algorithm in step 124. The terrain analysis algorithm will generate a raster data set which identifies the terrain information of interest, which in this example is a landing zone for a V/STOL (i.e., no trees or sand within 100 meters, and slope less than 10 degrees).

The output results produced from the terrain analysis algorithm component in step 124 can be displayed on a display screen so that the user can visualize the results of the analysis. In this case, the display could mark cells comprising potential landing zones with hash marks or color. Still, the invention is not limited in this regard and the results from the execution of the terrain analysis algorithm can instead be used as input data for further terrain analysis using the methods described herein. Accordingly, the process can continue in step 128 with a determination as to whether the user has requested some further terrain analysis. If so, the process can return to step 104; otherwise the process can end.

The present invention can be realized in one computer system. Alternatively, the present invention can be realized in several interconnected computer systems. Any kind of computer system or other apparatus adapted for carrying out the methods described herein is suited. A typical combination of hardware and software can be a general-purpose computer system. The general-purpose computer system can have a computer program that can control the computer system such that it carries out the methods described herein.

The present invention can take the form of a computer program product on a computer-usable storage medium (for example, a hard disk or a CD-ROM). The computer-usable storage medium can have computer-usable program code embodied in the medium. The term computer program product, as used herein, refers to a device comprised of all the features enabling the implementation of the methods described herein. Computer program, software application, computer software routine, and/or other variants of these terms, in the present context, mean any expression, in any language, code, or notation, of a set of instructions intended to cause a system having an information processing capability to perform a particular function either directly or after either or both of the following: a) conversion to another language, code, or notation; or b) reproduction in a different material form.

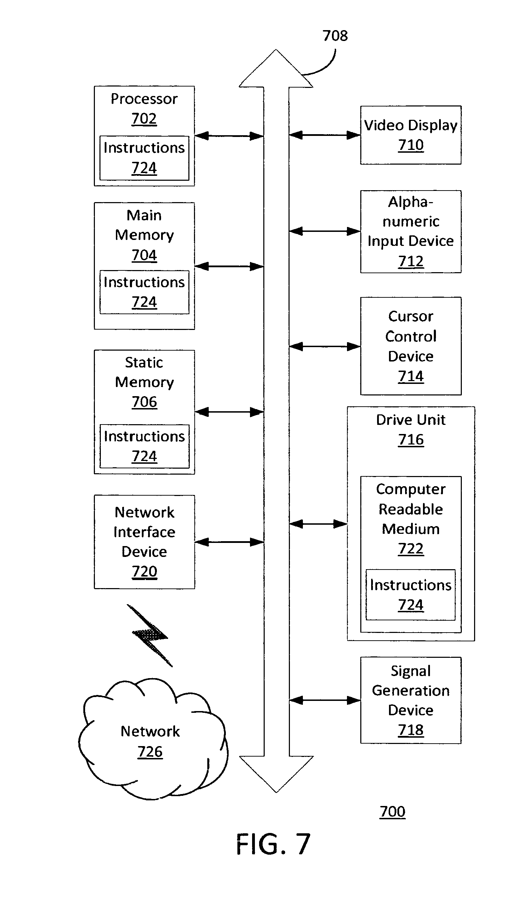

As shown in FIG. 7, a computer system 700 can comprise various types of computing systems and devices, including a server computer, a client user computer, a personal computer (PC), a tablet PC, a laptop computer, a desktop computer, a control system, a network router, switch or bridge, or any other device capable of executing a set of instructions (sequential or otherwise) that specifies actions to be taken by that device. It is to be understood that a device of the present disclosure also includes any electronic device that provides voice, video or data communication. Further, while a single computer is illustrated in FIG. 7, the phrase "computer system" shall be understood to include any collection of computing devices that individually or jointly execute a set (or multiple sets) of instructions to perform any one or more of the methodologies discussed herein.

The computer system 700 includes a processor 702 (such as a central processing unit (CPU), a graphics processing unit (GPU, or both), a main memory 704 and a static memory 706, which communicate with each other via a bus 708. The computer system 700 can further include a display unit 710, such as a video display (e.g., a liquid crystal display or LCD), a flat panel, a solid state display, or a cathode ray tube (CRT)). The computer system 700 can include an input device 712 (e.g., a keyboard), a cursor control device 714 (e.g., a mouse), a disk drive unit 716, a signal generation device 718 (e.g., a speaker or remote control) and a network interface device 720.

The disk drive unit 716 includes a computer-readable storage medium 722 on which is stored one or more sets of instructions 724 (e.g., software code) configured to implement one or more of the methodologies, procedures, or functions described herein. The instructions 724 can also reside, completely or at least partially, within the main memory 704, the static memory 706, and/or within the processor 702 during execution thereof by the computer system 700. The main memory 704 and the processor 702 also can constitute machine-readable media.

Dedicated hardware implementations including, but not limited to, application-specific integrated circuits, programmable logic arrays, and other hardware devices can likewise be constructed to implement the methods described herein. Applications that can include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the exemplary system is applicable to software, firmware, and hardware implementations.

In accordance with various embodiments of the present invention, the methods described above are stored as software programs in a computer-readable storage medium and are configured for running on a computer processor. Furthermore, software implementations can include, but are not limited to, distributed processing, component/object distributed processing, parallel processing, virtual machine processing, which can also be constructed to implement the methods described herein.

In the various embodiments of the present invention a network interface device 720 connected to a network environment 726 communicates over the network 726 using the instructions 724. The instructions 724 can further be transmitted or received over a network 726 via the network interface device 720.

While the computer-readable storage medium 722 is shown in an exemplary embodiment to be a single storage medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present disclosure.

The term "computer-readable medium" shall accordingly be taken to include, but not be limited to, solid-state memories such as a memory card or other package that houses one or more read-only (non-volatile) memories, random access memories, or other re-writable (volatile) memories; magneto-optical or optical medium such as a disk or tape; as well as carrier wave signals such as a signal embodying computer instructions in a transmission medium; and/or a digital file attachment to e-mail or other self-contained information archive or set of archives considered to be a distribution medium equivalent to a tangible storage medium. Accordingly, the disclosure is considered to include any one or more of a computer-readable medium or a distribution medium, as listed herein and to include recognized equivalents and successor media, in which the software implementations herein are stored.

Those skilled in the art will appreciate that the computer system architecture illustrated in FIG. 7 is one possible example of a computer system that can be used in an embodiment of the present invention. However, the invention is not limited in this regard and any other suitable computer system architecture can also be used without limitation.

All of the apparatus, methods and algorithms disclosed and claimed herein can be made and executed without undue experimentation in light of the present disclosure. While the invention has been described in terms of preferred embodiments, it will be apparent to those of skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those skilled in the art are deemed to be within the spirit, scope and concept of the invention as defined.

## Claims

1. A mission adaptable terrain analysis system comprising a computer storage medium encoded with the following computer-executable components:
a first input component that, when executed, receives a user determined selection of a plurality of basic map elements and at least one logical operator which in combination define a basic terrain analysis query;
at least one basic terrain evaluation component that, when executed, is capable of determining a basic terrain evaluation for each of a plurality of geographic cells within a predefined analysis area in accordance with said basic terrain analysis query;
a plurality of terrain algorithm components each, when executed, capable of processing information derived from said basic terrain evaluation of each said geographic cell, to generate a higher level analysis pertaining to said predefined analysis area;
a second input component that, when executed, receives a user determined selection of at least one said terrain algorithm component and a user determined selection of input data to be used by said terrain algorithm component, said input data having an input data format and an input data semantic; and
a plurality of transform components each, when executed, configured to selectively transform data comprising said basic terrain evaluations to said input data format; and
a third input component that, when executed, receives a user determined selection of at least one said transform component.

2. The mission adaptable terrain analysis system according to claim 1, wherein said third input component is configured to receive at least one user determined input for construct a custom transform component.

3. The mission adaptable terrain analysis system according to claim 2 wherein said third input component is configured to allow a user to construct a custom transform component which is selected from the group consisting of a modified one of said plurality of transform components, a logical combination of said plurality of said transform components, and a new transform component for transforming data in a way that is different from any of said plurality of transform components.

4. The mission adaptable terrain analysis system according to claim 1, wherein said basic terrain evaluation determines at least one value for each geographic cell which is representative of a terrain related characteristic for said geographic cell.

5. The mission adaptable terrain analysis system according to claim 1, wherein said input data semantic is selected from the group consisting of a time cost to use the cell, a percent mobility assigned to the cell, a percent visibility assigned to the cell, a scalar modifier assigned to the cell, and a slope of the cell.

6. The mission adaptable terrain analysis system according to claim 1, wherein said second input component facilitates selection of said terrain analysis algorithm by receiving a user determined selection of a terrain analysis category prior to prompting said user for selection of said terrain analysis algorithm, said terrain analysis category selected from the group consisting of a point, line and area category.

7. The mission adaptable terrain analysis system according to claim 1, further comprising a display component that, when executed, receives a user determined selection of at least one raster display for visualizing an output data of said terrain analysis algorithm.

8. A method for mission adaptable terrain analysis of a plurality of geographic cells comprising an analysis area, comprising:
receiving a user determined selection of at least one terrain algorithm component to be used for said analysis area, and a user determined selection of input data to be used by said terrain algorithm component, said input data having an input data format and an input data semantic;
receiving a user determined selection of at least one of a plurality of transform components, each capable of transforming basic terrain information to input data having said input data format and said input data semantic for at least one of said terrain algorithm components;
using said at least one transform component selected by said user to transform said basic terrain information to said input data having said input data format and said input data semantic required for said at least one terrain algorithm component selected by said user;
processing said input data with said terrain algorithm component to generate a higher level terrain analysis.

9. The method according to claim 8, further comprising receiving a user determined selection of a plurality of basic map elements and at least one logical operator to define a basic terrain analysis query; and
evaluating said basic terrain query in at least one basic terrain evaluation component to determine said basic terrain information.

10. The method according to claim 8, further comprising using at least one user determined input for building a custom transform component selected from the group consisting of a modification of a one of said plurality of transform components, a logical combination of two or more of said plurality of said transform components, and a new transform component capable of transforming data in a way that is different from said plurality of transform components.
